# EUROPÄISCHE PATENTSCHRIFT

(11) **EP 1 472 650 B1**
(45) Veröffentlichungstag und Bekanntmachung des Hinweises auf die Patenterteilung: **19.03.2008**
(21) Anmeldenummer: 02787363.7
(22) Anmeldetag: 14.11.2002
(51) Int. Cl.: G06K 19/077

(54) **FOLIENBATTERIE MIT INTEGRIERTEM BAUELEMENT ZUR VERWENDUNG IN EINER CHIPKARTE**
FOIL BATTERY WITH INTEGRATED COMPONENT FOR USE IN A CHIP CARD
PILE A MEMBRANE POURVUE D'UN COMPOSANT INTEGRE ET CONNUE POUR ETRE UTILISEE DANS UNE CARTE A PUCE

(30) Priorität: 28.11.2001 DE 10158195
(43) Veröffentlichungstag der Anmeldung: 03.11.2004
(73) Patentinhaber: Sagem Orga GmbH, 33106 Paderborn (DE)
(72) Erfinder: KÖNIG, Karl-Heinz, 24220 Flintbek (DE); OSTERWALD, Frank, 24103 Kiel (DE)
(86) Internationale Anmeldenummer: PCT/DE2002/004229
(87) Internationale Veröffentlichungsnummer: WO 2003/052684

(56) Entgegenhaltungen:
- EP-A- 0 347 897
- DE-A- 19 933 757
- US-A1- 2001 007 335

## Beschreibung

Die Erfindung betrifft eine Folienbatterie zur Verwendung in einer Chipkarte sowie eine Chipkarte mit einer entsprechenden Folienbatterie, insbesondere eine sogenannte Super Smart Card, und ein Verfahren zur Herstellung einer Folienbatterie und einer diese beinhaltende Chipkarte.

Aus dem Stand der Technik ist die Verwendung von Folienbatterien für die Spannungsversorgung von Chipkarten an sich bekannt. Solche Folienbatterien werden auch als Flachbatterien bezeichnet. Solche Batterien sind beispielsweise von der Firma VARTA Gerätebatterie GmbH, D-73479 Ellwangen, Deutschland kommerziell erhältlich.

Von der Firma E. C. R. -Electro-Chemical Research, Ltd. 76117 Rehovot, NL, wird weiter eine ultradünne, schichtweise aufgebaute Batterie für Chipkarten angeboten, die als RHISS-Batterie bekannt ist (RHISS=rechargeable hydrogen ion solid state electrolyte). Die RHISS-Batterie ist zwischen 0,35 und 0,70 mm dünn, wird in einem Batteriepack isoliert und in die Chipkarte eingesetzt, um dort mit den Leiterbahnen der Chipkarte verbunden zu werden.

Aus der DE 199 33 757 A1 ist eine Chipkarte mit einer integrierten Batterie bekannt. Anstelle der Integration einer vorgefertigten Folien- oder Flachbatterie wird hier die Fertigung der Batterie in den Herstellungsprozess der Chipkarte integriert.

Die Spannungsversorgung einer Chipkarte mittels einer in die Chipkarte integrierten Folienbatterie ist insbesondere für Anwendungen vorteilhaft, die nicht das Einführen der Chipkarte in einen Terminal vorsehen. Beispiele für solche Anwendungen sind die sogenannte Geldkarte mit Display zur Anzeige des auf der Karte noch verfügbaren Geldbetrags. Von besonderer Bedeutung ist die Integration einer Folienbatterie auch für sogenannte Super Smart Cards, sowie sogenannter System on Card Anwendungen, worunter man eine Chipkarte mit integrierten aufwendigen Kartenelementen versteht.

Eine weitere Anwendung ist für sogenannte Dual-Interface-Karten gegeben. Hierunter versteht man eine Chipkarte mit kontaktbehafteter und kontaktloser Schnittstelle für die Datenübertragung von und zur Karte. Die Folienbatterie kann zur Spannungsversorgung der Karte für den kontaktlosen Fall dienen. Ebenso kann eine Folienbatterie für die Spannungsversorgung einer Chipkarte, welche lediglich über eine kontaktlose Schnittstelle verfügt, eingesetzt werden.

Beispiele für entsprechende Chipkartenanwendungen sind unter anderem bekannt aus DE 199 40 561 C1, EP 0 989 514 A2, DE 199 13 093 C2, DE 199 10 768 A1.

Aus der DE 199 45 708 A1 ist eine Chipkarte bekannt, welche eine Kernfolie und zwei Deckfolien, Mitteln zur kontaktlosen und / oder kontaktbehafteten Datenübertragung, einen Halbleiterchip und ein weiteres elektronisches Bauelement, einen Kondensator sowie Leiterbahnen zur elektrischen Kontaktierung der Komponenten umfasst. Der Kondensator wird durch zwei sich teilweise überlappende und im Überlappungsbereich durch ein Dielektrikum voneinander getrennte Leiterbahnen gebildet, die durch Siebdruck eines UV-härtbaren Materials auf der Kernfolie hergestellt sind.

Der Erfindung liegt die Aufgabe zu Grunde, eine verbesserte Folienbatterie zur Verwendung in einer Chipkarte sowie eine entsprechende verbesserte Chipkarte und ein Verfahren zur Herstellung einer Folienbatterie zu schaffen.

Die der Erfindung zu Grunde liegende Aufgabe wird mit den Merkmalen der unabhängigen Patentansprüche jeweils gelöst. Bevorzugte Ausführungsbeispiele der Erfindung sind in den abhängigen Patentansprüchen angegeben.

Die Erfindung erlaubt es, eine Metallisierungsschicht oder mehrere Metallisierungsschichten, die zumeist ohnehin in einer Folienbatterie vorhanden sind, für die Integration von einem oder mehren Bauelementen zu nutzen. Diese Bauelemente können dann von dem Modul der Chipkarte über die zumeist ohnehin an der Folienbatterie angeordneten Kontaktelemente und / oder über gesonderte Kontakte angesteuert werden.

Ein besonderer Vorteil der Erfindung ist darin zu sehen, dass die sonst im Stand der Technik erforderlichen, aufwendigen und kostspieligen Prozessschritte sowie Materialien für die Realisierung von Bauelementen, wie z. B. Antennen und Kondensatoren, eingespart werden können. Insbesondere entfällt der technische Aufwand für die gesonderte Integration einer Folienbatterie und der weiteren Bauelemente in den Chipkartenkörper.

Dies wird erfindungsgemäß dadurch erreicht, dass die in einer Folienbatterie ohnehin vorhandene Metallisierungsschicht bzw. mehrere der Metallisierungsschichten für die Integration von Bauelementen genutzt werden. Dadurch reduziert sich der Aufwand bei der Herstellung der Chipkarte auf die Integration der Batterie in den Chipkartenkörper, da in der Batterie die weiteren Bauelemente integriert sind, und somit eine gesonderte Integration der weiteren Bauelemente entfällt.

Nach einer bevorzugten Ausführungsform der Erfindung kommt eine Folienbatterie zum Einsatz, die eine innere Schicht aufweist, die im Wesentlichen den Elektrolyten beispielsweise in gebundener Form als Elektrolytpaste enthält. Die Anode und die Kathode der Folienbatterie werden durch äußere Kupferschichten gebildet, die jeweils ganzflächig auf den beiden Seiten der Batterie aufgebracht sind.

Statt Kupfer kann dabei auch beispielsweise Aluminium zum Einsatz kommen. Generell ist jedoch die Erfindung nicht auf einen bestimmten Folienbatterietyp beschränkt, sondern sie kann für alle Folienbatterietypen eingesetzt werden, bei denen zumindest eine Metallisierungsschicht vorhanden ist.

Nach einer bevorzugten Ausführungsform der Erfindung wird diejenige Metallisierungsschicht, die die Anode oder die Kathode der Folienbatterie bildet, für die Integration des Bauelements genutzt. Für die Integration einer Antenne, einer Spule oder eines elektrischen Widerstands ist nur eine Metallisierungsschicht erforderlich, während für die Integration, beispielsweise eines Kondensators, zwei Metallisierungsschichten benötigt werden.

Nach einer weiteren bevorzugten Ausführungsform der Erfindung handelt es sich bei der Metallisierungsschicht nicht unmittelbar um die Anode oder die Kathode, sondern eine Kontaktierungsschicht zur Herstellung einer elektrischen Verbindung mit der Anode oder der Kathode. Eine solche Metallisierungsschicht befindet sich oft in oder an einem Außenbereich der Folienbatterie, beispielsweise für die Kontaktierung der Folienbatterie nach außen, sowie auch für die Kapselung der Folienbatterie gegen äußere mechanische Einflüsse, sowie auch die Kapselung gegen Feuchtigkeit.

Nach einer weiteren bevorzugten Ausführungsform der Erfindung sind zwei Metallisierungsschichten in der Folienbatterie vorhanden, die jeweils ein Kontaktelement zum Anschluss an das Modul der Chipkarte aufweisen, um das Modul mit Spannung zu versorgen. Zumindest eines dieser Kontaktelemente wird neben der Spannungsversorgung auch für die Kontaktierung zwischen dem Modul und dem in der Folienbatterie integrierten Bauelement genutzt. Alternativ sind gesonderte Leitungsverbindungen zu dem Bauelement vorhanden, um eine Kontaktierung mit dem Modul herzustellen. Auch diese gesonderten Leitungsverbindungen sind dabei vorzugsweise in der Metallisierungsschicht der Folienbatterie integriert oder auf diese aufgebracht.

Nach einer weiteren bevorzugten Ausführungsform der Erfindung handelt es sich bei dem Bauelement um eine Antenne. Eine Antennenstruktur wird dazu auf oder in einer der Metallisierungsschichten z. B. durch Ätzen, Stanzen oder durch Aufbringung einer gewickelten Spule mit oder ohne Trägerfolie integriert.

Die Antenne kann dabei mit der Metallisierungsschicht elektrisch verbunden sein. In diesem Fall kann das Kontaktelement der Metallisierungsschicht für die Ansteuerung der Antenne bzw. den Empfang von Antennensignalen in dem Modul verwendet werden. Wenn eine solche Kontaktierung der Antenne mit der Metallisierungsschicht nicht gegeben ist, wird eine elektrische Verbindung zwischen dem Modul und der Antenne durch eine gesonderte Leitungsverbindung hergestellt.

Nach einer weiteren bevorzugten Ausführungsform der Erfindung werden die Folienbatterie und die in die Folienbatterie integrierte Antenne in Serie geschaltet, so dass die Kontaktierung von Batterie und Antenne über das entsprechende Kontaktelement der betreffenden Metallisierungsschicht hergestellt werden kann. Ein solches Kontaktelement wird auch als Batterie-Kontaktfahne bezeichnet. Alternativ erfolgt eine gesonderte Beschaltung von Antenne und Batterie, insbesondere dann, wenn der integrierte Schaltkreis des Moduls der Chipkarte dies erforderlich macht.

Die Nutzung einer Batterie-Kontaktfahne sowohl für die Spannungsversorgung als auch für die Kontaktierung eines Bauelements, beispielsweise der Antenne, ist möglich, da die Versorgungs- und Signal-Ströme unterschiedliche Frequenzen aufweisen. Bei den Versorgungsströmen handelt es sich im Wesentlichen um Gleichstrom und bei den Signal-Strömen um Wechselströme, die von der Antenne empfangen und / oder übertragen werden.

Nach einer weiteren bevorzugten Ausführungsform der Erfindung ist in die Folienbatterie ein Kondensator integriert. Hierzu werden zwei gegenübliegende Metallisierungsschichten der Folienbatterie verwendet. Ferner kann in einer der Metallisierungsschichten eine Spule integriert werden. Die Spule und der Kondensator können dann durch eine ebenfalls in der Folienbatterie integrierte Leitungsverbindung kontaktiert werden, um einen Schwingkreis zu schaffen.

Nach einer weiteren bevorzugten Ausführungsform der Erfindung ist ein elektrischer Widerstand in einer Metallisierungsschicht der Folienbatterie integriert. Hierzu wird ein Teilbereich der Metallisierüngsschicht von der umgebenden Metallisierungsschicht z. B. durch Ätzen oder Stanzen abgetrennt. Dieser abgetrennte Teilbereich bildet dann einen elektrischen Widerstand einer definierten Größe.

Besonders vorteilhaft ist der Einsatz einer erfindungsgemäßen Folienbatterie zur Integration in einer Chipkarte, wobei die Folienbatterie an das Modul der Chipkarte für die Spannungsversorgung und für die Kontaktierung des Moduls mit den in der Folienbatterie integrierten Bauelementen elektrisch verbunden wird. Dies ist insbesondere für Chipkartenanwendungen von Vorteil, die eine relativ große Folienbatterie erfordern, um besondere Bedienfunktionen zu ermöglichen und die entsprechenden Bauelemente, wie z. B. Tastatur, Display, biometrische Sensoren, Kryptospeicherchips, Multifunktions-Controller und andere Einheiten mit Spannung zu versorgen. Vorzugsweise werden dabei auch die für die Realisierung dieser weiteren Funktionen erforderlichen Bauelemente ganz oder teilweise mit in die Folienbatterie, das heißt, in eine oder mehrere der Metallisierungsschichten der Folienbatterie, integriert. Hierdurch ist insbesondere auch ein sogenanntes "System on Card" realisierbar.

Nach einer bevorzugten Ausführungsform der Erfindung wird das betreffende Bauelement in der Metallisierungsschicht durch einen Ätz- oder einen Stanzschritt realisiert. Alternativ wird das gewünschte Bauelement auf die Metallisierungsschicht aufgebracht und dabei mit der Metallisierungsschicht elektrisch verbunden oder gegenüber der Metallisierungsschicht, beispielsweise durch eine Trägerfolie oder eine Isolations- und / oder Klebeschicht, elektrisch isoliert.

Nach einer weiteren bevorzugten Ausführungsform der Erfindung wird die Folienbatterie so hergestellt, dass zumindest eine der Metallisierungsschichten verlängert ausgebildet ist, so dass die betreffende Metallisierungsschicht über den Rand der Folienbatterie hinausragt. In diesen über den Rand der Folienbatterie hinausragenden Bereich wird dann das gewünschte Bauelement integriert. Dann wird der vorstehende Bereich entlang einer Knicklinie um z.B. 180 ° geknickt, so dass das Bauelement auf der Metallisierungsschicht oder einer auf der Metallisierungsschicht befindlichen Isolations- oder Klebeschicht zum Aufliegen kommt.

Nach einer weiteren bevorzugten Ausführungsform der Erfindung wird eine Isolationsschicht der Folienbatterie zur Integration von einem oder mehreren elektrischen oder elektronischen Bauelementen verwendet. Eine solche Isolationsschicht ist zumeist in einer Folienbatterie ohnehin vorhanden, um die Batteriepole voneinander elektrisch zu isolieren. Beispielsweise können auf einer solchen Isolationsschicht ein oder mehrere Windungen einer Antenne aufgebracht werden. Diese Windungen sind nach einer bevorzugten Ausführungsform der Erfindung um einen Batteriepol umlaufend ausgebildet.

Zur Herstellung eines Bauelements auf der Isolationsfolie kann ein überstehendes Metallisierungsstück eines der Batteriepole verwendet werden. Dieses kann beispielsweise mittels Stanzen oder mittels eines Ätzschritts bearbeitet werden, um die gewünschte Leiterbahngeometrie auf der Isolationsschicht herzustellen.

Nach einer weiteren bevorzugten Ausführungsform der Erfindung ist eine Antenne mittels um einen der Batteriepole der Folienbatterie umlaufende Wicklungen auf der Isolationsschicht ausgebildet. Die Kontaktierung der umlaufenden Windungen erfolgt über die Kontaktfahne des betreffenden Batteriepols. Die elektrische Verbindung zwischen der anderen Kontaktfahne der Folienbatterie mit ihrem Batteriepol kann dann als Antennenbrücke verwendet werden.

Nach einer weiteren bevorzugten Ausführungsform der Erfindung ist die Isolationsschicht der Folienbatterie über den Rand der Batteriepole hinaus verlängert ausgebildet. Dadurch wird zusätzlicher Raum für die Integration von Bauelementen auf der Isolationsschicht gewonnen. Entsprechend vergrößert sich dann auch der Abstand der Kontaktfahnen der Folienbatterie von dem Batteriekörper. Dieses stellt einen weiteren Vorteil dar, da für die Kontaktierung der Kontaktfahnen mit dem Chipkartenmodul im Allgemeinen ein thermischer Verfahrensschritt notwendig ist. Durch die größere räumliche Beabstandung der Kontaktfahnen von dem Batteriekörper wird die Belastung der Folienbatterie durch dieses thermischen Schritt reduziert.

Nach einer weiteren bevorzugten Ausführungsform der Erfindung ist die auf der Isolationsschicht realisierte Antenne mit der Folienbatterie in Reihe geschaltet, so dass keine sonst erforderliche zusätzliche Antennenbrücke benötigt wird. Die befriedigende Realisierung einer solchen zusätzlichen Antennenbrücke in anderen Schaltungsstrukturen stellt ein im Stand der Technik an sich ungelöstes Problem dar.

Im Weiteren werden bevorzugte Ausführungsbeispiele der Erfindung mit Bezugnahme auf die Zeichnungen näher erläutert. Es zeigen:
- Figur 1: ein Blockdiagramm einer Ausführungsform einer erfindungsgemäßen Chipkarte,
- Figur 2: ein schematisches Schichtdiagramm einer Ausführungsform einer erfindungsgemäßen Folienbatterie,
- Figur 3: ein Schichtdiagramm einer weiteren bevorzugten Ausführungsform einer erfindungsgemäßen Folienbatterie während des Herstellungsvorgangs,
- Figur 4: eine Draufsicht auf eine Ausführungsform einer erfindungsgemäßen Folienbatterie mit integrierten Bauelementen,
- Figur 5: ein Ersatzschaltbild einer Serienschaltung einer in eine Folienbatterie integrierten Antenne
- Figur 6: ein Ersatzschaltbild für einen in eine Folienbatterie integrierten Kondensator,
- Figur 7: eine Draufsicht auf eine bevorzugte Ausführungsform einer Folienbatterie mit umlaufenden Antennenwicklungen,
- Figur 8: eine Seitenansicht der Folienbatterie der Figur 7.

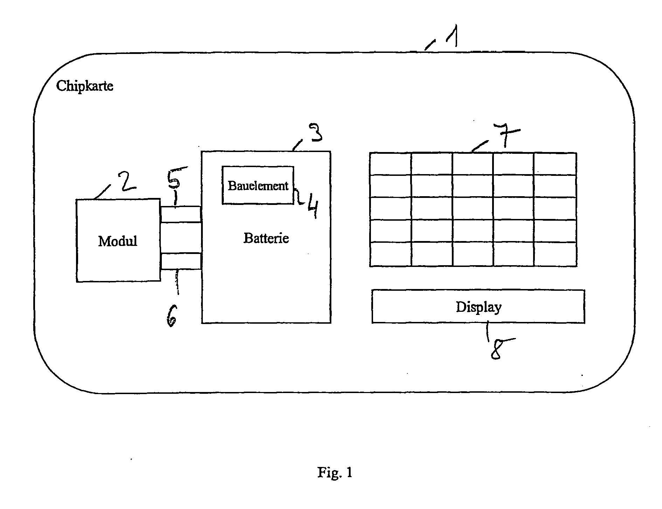

Die Figur 1 zeigt ein Blockschaltbild einer Chipkarte 1. Bei der Chipkarte 1 kann es sich um jeden beliebigen Chipkartentyp handeln, wie z. B. um eine Speicherchipkarte, eine intelligente Speicherchipkarte mit einer logischen Schaltung, eine Prozessorchipkarte, eine Smart Card, eine Super Smart Card oder ein System on Card.

Die Chipkarte 1 hat ein Modul 2, welches einen elektronischen Schaltkreis, beispielsweise einen elektronischen Speicher und / oder einen Mikroprozessor, beinhaltet. Vorzugsweise befindet sich das Modul 2 an einer räumlichen Position in der Chipkarte 1, die durch die Norm ISO 7816-1,2 gegeben ist. Wenn sich das Modul 2 in einer solchen normgerechten Position befindet, wird es beim Einführung in einen Terminal elektrisch kontaktiert und mit Spannung versorgt.

Es gibt jedoch auch Anwendungen für die Chipkarte 1 außerhalb eines solchen Terminals, wozu die Chipkarte 1 eine Batterie 3 aufweist. Bei der Batterie 3 handelt es sich um eine Folienbatterie, die synonym auch als Flachbatterie bezeichnet wird. In der Batterie 3 ist zumindest ein Bauelement 4 auf oder in einer der Metallisierungsschichten der Batterie 3 integriert.

Die Batterie 3 hat ferner Kontaktfahnen 5 und 6 zum Anschluss an das Modul 2, um das Modul 2 mit Spannung zu versorgen. Ferner kann die Kontaktfahne 5 und / oder die Kontaktfahne 6 für die Kontaktierung des Bauelements 4 verwendet werden.

Die Chipkarte 1 kann weitere Elemente aufweisen, wie z. B. eine Tastatur 7 und ein Display 8. Vorzugsweise sind dabei auch Bauelemente der Tastatur 7 und / oder des Displays 8 in einer Metallisierungsschicht der Batterie 3 integriert.

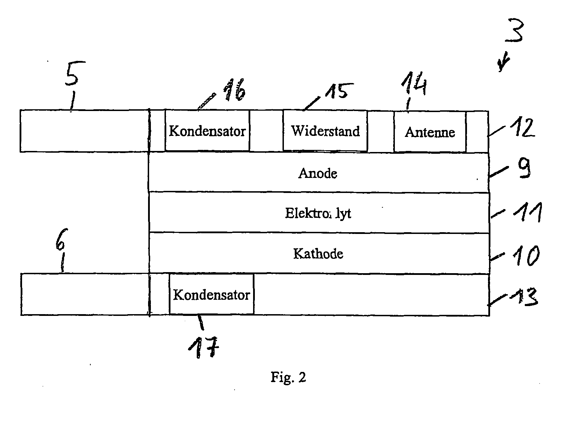

Die Figur 2 zeigt eine schematische Darstellung der einzelnen Schichten der Batterie 3 im Querschnitt. Die Batterie 3 hat eine Anode 9 und eine Kathode 10, zwischen denen sich ein Elektrolyt 11 befindet. Bei dem Elektrolyt 11 handelt es sich vorzugsweise um einen pastenförmigen Elektrolyt.

Die Batterie 3 hat ferner eine obere Metallisierungsschicht 12 zur Kontaktierung der Anode 9. In einem Endbereich der Metallisierungsschicht 12 befindet sich die Kontaktfahne 5.

Entsprechend hat die Batterie 3 eine untere Metallisierungsschicht 13 zur Kontaktierung der Kathode 10. An einem Endbereich weist die Metallisierungsschicht 13 die Kontaktfahne 6 auf.

In dem gezeigten Anwendungsfall der Figur 2 ist in der oberen Metallisierungsschicht 12 eine Antenne 14 integriert. Die Antenne 14 kann in der Metallisierungsschicht 12 durch einen Ätz- oder einen Stanzvorgang ausgebildet werden. Alternativ kann die Antenne 14 auch durch Aufbringen, z. B. Aufkleben eines Antennenelements auf die Metallisierungsschicht 12 integriert werden. Die Integration der Antenne 14 kann dabei so erfolgen, dass eine elektrische Verbindung zwischen der Antenne 14 und der Metallisierungsschicht 12 hergestellt wird. In diesem Fall kann die Antenne 14 über die Kontaktfahne 5 von dem in dem Modul 2 (vgl. Figur 1) befindlichen integrierten Schaltkreis angesteuert werden.

Entsprechend ist in der Metallisierungsschicht 12 ein elektrischer Widerstand 15 integriert. Auch der Widerstand 15 kann durch einen Ätz- oder einen Stanzschritt sowie durch Aufkleben eines Widerstandelements auf die Metallisierungsschicht 12 integriert werden.

Des Weiteren ist in der Metallisierungsschicht 12 eine Kondensatorelektrode 16 integriert. In der Metallisierungsschicht 13 ist eine entsprechende Kondensatorelektrode 17 integriert. Durch die Kondensatorelektroden 16 und 17 ist ein Kondensator gebildet, der über gesonderte Leitungen, die in der Figur 2 der Übersichtlichkeit halber nicht dargestellt sind, von dem integrierten Schaltkreis des Moduls 2 (vgl. Figur 1) angesteuert oder mit diesem verschaltet werden kann.

Alternativ zu der Ausführungsform der Figur 2 kann auch auf die Metallisierungsschichten 12 und 13 der Batterie 3 verzichtet werden, indem die Anode 9 und die Kathode 10 unmittelbar auch als Kontaktierungsschichten mit entsprechenden Kontaktfahnen ausgebildet werden. Die Bauelemente, das heißt, die Antenne 14, der Widerstand 15 und die Kondensatorelektroden 16, 17 werden dann in die Metallisierungsschicht der Anode 9 bzw, der Kathode 10 integriert.

Auch bei der in der Figur 2 gezeigten Ausführungsform ist es nicht zwingend, die genannten Bauelemente in den Metallisierungsschichten 12 und 13 zu integrieren. Alternativ oder zusätzlich können auch die genannten oder weitere Bauelemente in den Metallisierungsschichten der Anode 9 und / oder der Kathode 10 integriert werden.

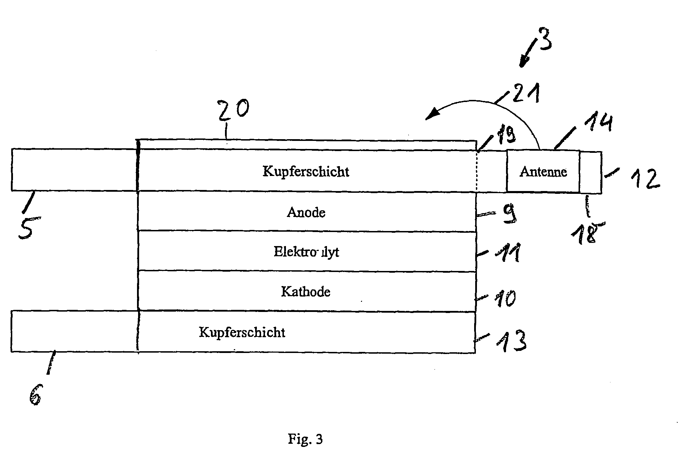

Die Figur 3 zeigt ein weiteres Ausführungsbeispiel einer Batterie 3 während des Herstellungsvorgangs. Elemente der Figur 3 die Elementen der Figur 1 und der Figur 2 entsprechen, sind mit denselben Bezugszeichen gekennzeichnet.

Die Metallisierungsschichten 12 und 13 bestehen in der Ausführungsform der Figur 3 aus Kupfer. Die Metallisierungsschicht 12 ist über die Begrenzung der Batterie 3 hinaus verlängert ausgeführt. In dem entsprechenden Bereich 18 der Metallisierungsschicht 12, der über die Berandung der Batterie 3 hervorsteht, ist eine Antenne 14 integriert. Der Bereich 18 ist durch eine Knicklinie 19 in Richtung auf den Rand der Batterie 3 begrenzt.

Auf der Metallisierungsschicht 12 befindet sich eine Schicht 20, die zur Isolation dient und /oder als Klebeschicht ausgebildet ist. Der Bereich 18 wird entlang der Pfeilrichtung 21 um die Knicklinie 19 um einen Winkel von ca. 180 ° gedreht, bis die Antenne 14 auf der Schicht 20 der Metallisierungsschicht 12 aufliegt. Wenn die Schicht 20 als Klebeschicht ausgebildet ist, wird die Antenne 14 hierdurch gleichzeitig fixiert.

Bei der Knickbewegung entlang der Knicklinie 19 kann diese aufgebrochen werden, so dass die Antenne 14 gegenüber der Metallisierungsschicht 12 isoliert wird. Eine elektrische Verbindung kann dann über die Schicht 20 hergestellt werden, wenn diese nicht als Isolationsschicht sondern als elektrisch leitfähige Schicht ausgebildet ist.

Alternativ kann die Metallisierungsschicht 12 bei der Knickbewegung elektrisch intakt bleiben, so dass auch nach der Knickbewegung eine unmittelbare elektrische Verbindung der Antenne 14 mit der Metallisierungsschicht 12 gegeben ist.

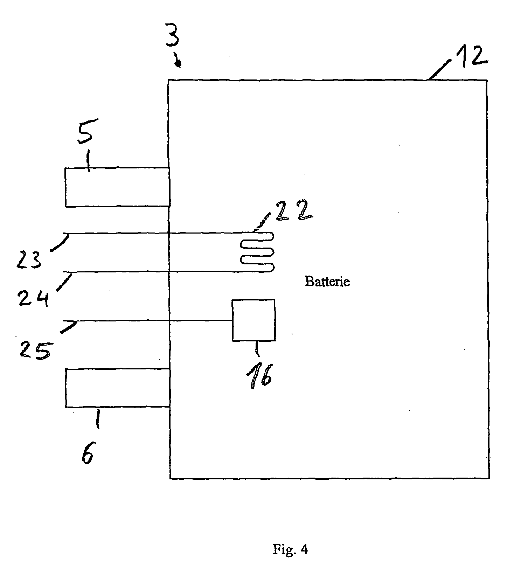

Die Figur 4 zeigt eine Draufsicht auf eine erfindungsgemäße Folienbatterie. Elemente der Figur 4, die Elementen der Figuren 1, 2 und 3 entsprechen, sind wiederum mit denselben Bezugszeichen gekennzeichnet.

In dem Ausführungsbeispiel der Figur 4 ist in der Metallisierungsschicht 12 eine Spule 22 integriert. Ferner sind in der Metallisierungsschicht 12 die Leiterbahnen 23 und 24 zur Kontaktierung der Spule 22 integriert. Diese Leiterbahnen 23 und 24 ragen über die Berandung der Batterie 3 zum Anschluss an das Modul 2 (vgl. Figur 1) oder andere Komponenten der Karte hinaus. Die Leiterbahnen 23 und 24 sind dabei z.B. durch einen Ätz- oder Stanzvorgang der Metallisierungsschicht 12 realisiert. Alternativ können die Leiterbahnen 23 und 24 auch durch eine Isolationsschicht von der Metallisierungsschicht 12 getrennt auf die Metallisierungsschicht 12 aufgebracht werden.

Entsprechen ist auch die Kondensatorelektrode 16 über eine Leiterbahn 25 kontaktierbar.

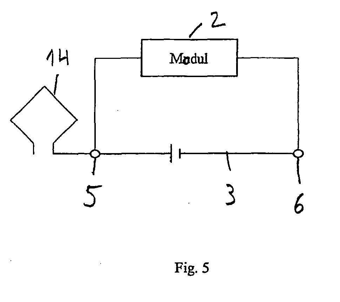

Die Figur 5 zeigt ein Ersatzschaltbild betreffend die in die Metallisierungsschicht 12 integrierte Antenne 14, für den Fall, dass die Antenne 14 mit der Metallisierungsschicht 12 elektrisch verbunden ist. Durch die Batterie 3 ist ein Zweipol mit den durch die Kontaktfahnen 5 und 6 gebildeten Pole realisiert. An diese beiden Pole ist das Modul 2 anschließbar. Dadurch wird das Modul 2 mit Spannung versorgt. Ferner kann der in dem Modul 2 befindliche integrierte Schaltkreis über die Kontaktfahne 5 die Antenne 14 ansteuern bzw. von der Antenne 14 Signale empfangen.

Ebenso ist es möglich die Antenne 14 als Zweipol zu betreiben, indem die beiden Anschlüsse der Antenne 14 mit den Kontaktfahnen 5 bzw. 6 verbunden werden.

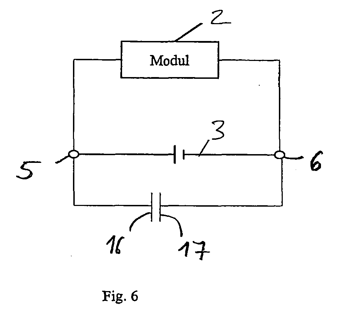

Die Figur 6 zeigt ein entsprechendes Ersatzschaltbild bezüglich der Integration des Kondensators in die Batterie 3. Der Kondensator wird dabei durch die Kondensatorelektroden 16 und 17 gebildet (vgl. Figur 2). Auch hier ist wiederum ein Zweipol mit den Kontaktfahnen 5 und 6 als Anschlüsse gegeben. Das Modul 2 wird über diese Kontaktfahnen 5 und 6 einerseits mit Spannung versorgt und kontaktiert darüber hinaus den durch die Kondensatorelektroden 16 und 17 gebildeten Kondensator für die Zwecke der in dem Modul 2 angeordneten elektronischen Schaltung.

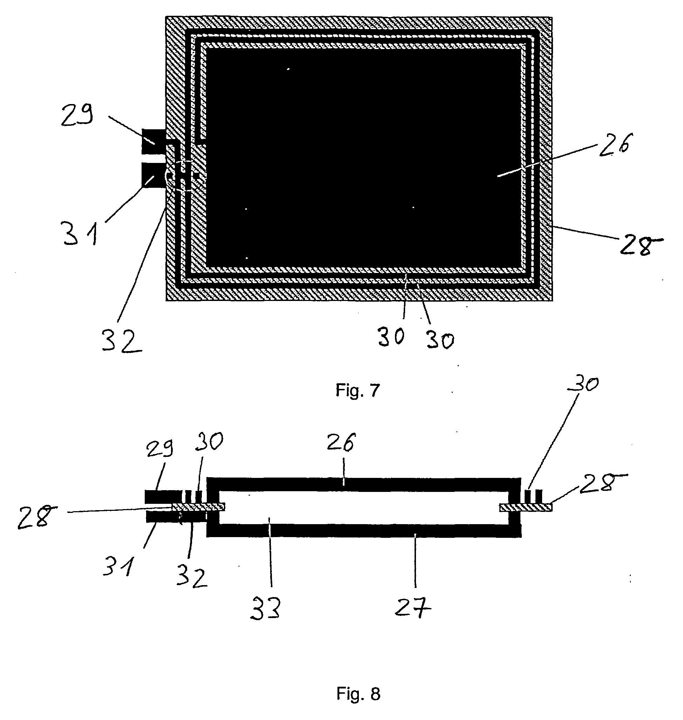

Figur 7 zeigt eine Draufsicht auf eine weitere Ausführungsform der Erfindung betreffend eine Folienbatterie mit auf der Isolationsschicht umlaufenden Antennenwicklungen. Die Folienbatterie der Figur 7 hat einen oberen Batteriepol 26 und eine unteren Batteriepol 27 (vgl. Figur 8). Die beiden Batteriepole sind durch eine Isolationsschicht 28 voneinander elektrisch isoliert. Der obere Batteriepol 26 hat eine Kontaktfahne 29, die mit dem oberen Batteriepol 26 über um den oberen Batteriepol 26 umlaufende Antennenwicklungen 30 elektrisch verbunden ist. Die Antennenwicklungen 30 sind auf der Oberseite der Isolationsschicht 28 aufgebracht.

Der untere Batteriepol 27 (vgl. Figur 8) hat eine Kontaktfahne 31, die mit dem unteren Batteriepol 27 mittels einer Leiterbahn 32 elektrisch verbunden ist. Die Leiterbahn 32 ist auf der Unterseite der Isolationsschicht 28 angeordnet.

An den Kontaktfahnen 29 und 31 steht also die Batteriespannung zur Verfügung, da die Kontaktfahnen 29 und 31 jeweils mit den entsprechenden Batteriepolen 26 bzw. 27 elektrisch verbunden sind und zwar durch die Antennenwicklungen 30 bzw. durch die Leiterbahn 32. Daneben können die Kontaktfahnen 29 und 31 auch zur Ansteuerung der durch die Antennenwicklungen 30 realisierten Antennenstruktur dienen. Durch die Leiterbahn 32 ist die Antennenbrücke dieser Antennenstruktur realisiert. Eine sonst erforderliche zusätzliche Antennenbrücke entfällt damit.

Die Leiterbahnen auf der Isolationsschicht 28, das heißt, die Antennenwicklungen 30 und die Leiterbahn 32, können durch an sich bekannte Herstellungsverfahren realisiert werden, so z. B. durch Ausstanzen von Teilen der Metallisierungsschicht der Batteriepole 26 und / 27, durch einen Ätzvorgang oder durch Aufkleben der entsprechenden Leiterbahnen.

Neben einer Antenne können auf der Isolationsschicht 28 auch andere Bauelemente realisiert werden, wie z. B. Spulen, Kondensatoren, Widerstände oder auch komplexe Strukturen, wie z. B. Aktuatoren, oder mikromechanische Elemente oder Systeme.

Die Figur 8 zeigt eine seitliche Ansicht der Folienbatterie der Figur 7. Die oberen und unteren Batteriepole 26 und 27 schließen ein Elektrolyt 33 ein und werden durch die Isolationsschicht 28 voneinander elektrisch isoliert.

### Bezugszeichenliste

- Chipkarte: 1
- Modul: 2
- Batterie: 3
- Bauelement: 4
- Kontaktfahne: 5
- Kontaktfahne: 6
- Tastatur: 7
- Display: 8
- Anode: 9
- Kathode: 10
- Elektrolyt: 11
- Metallisierungsschicht: 12
- Metallisierungsschicht: 13
- Antenne: 14
- Widerstand: 15
- Kondensatorelektrode: 16
- Kondensatorelektrode: 17
- Bereich: 18
- Knicklinie: 19
- Schicht: 20
- Pfeilrichtung: 21
- Spule: 22
- Leiterbahnen: 23
- Leiterbahnen: 24
- Leiterbahnen: 25
- Batteriepol: 26
- Batteriepol: 27
- Isolationsschicht: 28

- Kontaktfahne: 29
- Antennenwicklungen: 30
- Kontaktfahne: 31
- Leiterbahn: 32
- Elektrolyt: 33

## Patentansprüche

1. Folienbatterie zur Verwendung in einer Chipkarte (1), wobei die Folienbatterie (3) eine Metallisierungsschicht (9, 10, 12, 13) und / oder eine Isolationsschicht (28) aufweist,
**dadurch gekennzeichnet, dass**
auf oder in der Metallisierungsschicht und / oder der Isolationsschicht zumindest ein elektrisches, elektronisches und / oder mikromechanisches Bauelement (4, 30) integriert ist und das Bauelement an ein Modul (2) der Chipkarte anschließbar ist.

2. Folienbatterie nach Anspruch 1, bei der es sich bei der Metallisierungsschicht um eine Anode (9) oder um eine Kathode (10) handelt.

3. Folienbatterie nach Anspruch 1, bei der es sich bei der Metallisierungsschicht um eine Kontaktierungsschicht (12, 13) zur Herstellung einer elektrischen Verbindung mit einer Anode oder einer Kathode handelt.

4. Folienbatterie nach Anspruch 1, bei der es sich bei der Metallisierungsschicht um eine zusätzliche Metallisierungsschicht der Folienbatterie handelt.

5. Folienbatterie nach einem der vorhergehenden Ansprüche 1 bis 4, bei der es sich bei der Isolationsschicht um eine Schicht zur Isolation der Batteriepole (26, 27) der Folienbatterie handelt.

6. Folienbatterie nach einem der vorhergehenden Ansprüche 1 bis 5, mit einer auf der Isolationsschicht um einen der Batteriepole der Folienbatterie zumindest partiell umlaufende Antennenwicklung (30).

7. Folienbatterie nach einem der vorhergehenden Ansprüche 1 bis 6, bei der die Metallisierungsschicht erste und zweite Kontaktelemente (5, 6) für eine Spannungsversorgung des Moduls aufweist, und das erste und / oder das zweite Kontaktelement für eine Kontaktierung des Bauelements mit dem Modul verwendet wird.

8. Folienbatterie nach einem der vorhergehenden Ansprüche 1 bis 7, bei der es sich bei dem Bauelement um eine Antenne (14) oder um eine Spule (22) handelt.

9. Folienbatterie nach Anspruch 8, bei der die Antenne mit der Metallisierungsschicht elektrisch verbunden ist und über eines der Kontaktelemente von dem Modul ansteuerbar ist.

10. Folienbatterie nach Anspruch 8, bei der die Antenne oder die Spule von der Metallisierungsschicht elektrisch isoliert ist und über eine gesonderte Leitungsverbindung (23, 24) von dem Modul ansteuerbar ist, wobei die Leitungsverbindung vorzugsweise in der Metallisierungsschicht integriert ist oder auf der Metallisierungsschicht aufgebracht ist.

11. Folienbatterie nach einem der vorhergehenden Ansprüche 1 bis 7, bei der das Bauelement als Kondensator ausgebildet ist und eine erste Kondensatorelektrode (16) des Kondensators in der ersten Metallisierungsschicht (12) integriert ist und eine zweite Kondensatorelektrode (17) in einer zweiten Metallisierungsschicht (13) integriert ist und der Kondensator über je eine gesonderte Leitungsverbindung (25) mit dem Modul verbindbar ist, wobei die Leitungsverbindungen vorzugsweise in die Metallisierungsschichten integriert sind oder auf diese aufgebracht sind.

12. Folienbatterie nach einem der vorhergehenden Ansprüche 1 bis 7, bei der es sich bei dem Bauelement um einen elektrischen Widerstand (15) handelt und der elektrische Widerstand durch einen abgetrennten Teilbereich der Metallisierungsschicht gebildet wird, wobei der Widerstand vorzugsweise über zwei gesonderte Leitungsverbindungen mit dem Modul verbindbar ist und die Leitungsverbindungen vorzugsweise in die Metallisierungsschicht integriert sind oder auf diese aufgebracht sind.

13. Folienbatterie nach einem der vorhergehenden Ansprüche 1 bis 12, bei der das Bauelement in oder auf einer gegenüber der Metallisierungsschicht isolierenden Schicht (20) angeordnet ist.

14. Chipkarte mit einem Modul (2) und mit einer Folienbatterie (3) nach einem der vorhergehenden Ansprüche 1 bis 13, wobei die Folienbatterie mit dem Modul für dessen Spannungsversorgung und für die Kontaktierung des Moduls mit dem Bauelement verbunden ist.

15. Chipkarte nach Anspruch 14 mit einem oder mehreren der folgenden Elemente: Tastatur (7), Display (8), biometrische Sensoren, Kryptospeicherchips, Multifunktions-Controller, Aktuatoren, mikromechanische Bauelemente oder Systeme.

16. Verfahren zur Herstellung einer Folienbatterie zur Verwendung in einer Chipkarte und / oder einer Chipkarte nach einem der vorhergehenden Ansprüche 1 bis 15 mit folgenden Schritten:
- Herstellung einer Folienbatterie mit einer Metallisierungsschicht und / oder einer Isolationsschicht, wobei die Metallisierungsschicht und / oder die Isolationsschicht einen Bereich zur Integration eines elektrischen, elektronischen und / oder mikromechanischen Bauelements aufweist,
- Integration des Bauelements auf oder in der Metallisierungsschicht und / oder der Isolationsschicht.

17. Verfahren zur Herstellung einer Folienbatterie zur Verwendung in einer Chipkarte nach einem der vorhergehenden Ansprüche 1 bis 15 mit folgenden Schritten:
- Herstellung einer Folienbatterie mit einer Metallisierungsschicht, wobei die Metallisierungsschicht einen Bereich zur Integration eines elektrischen oder elektronischen Bauelements aufweist, und der Bereich eine Knicklinie an dessen Rand aufweist,
- Aufbringung einer Isolationsschicht auf die Metallisierungsschicht,
- Knicken des Bereichs entlang der Knicklinie bis das Bauelement auf der Isolationsschicht aufliegt.

18. Verfahren nach Anspruch 17, wobei die Isolationsschicht als Klebeschicht ausgebildet ist, so dass das Bauelement, nachdem es auf der Klebeschicht aufliegt, durch die Klebeschicht fixiert wird.

## Claims

1. Foil battery for use in a smart card (1), in which the foil battery (3) has a metallic layer (9, 10, 12, 13) and/or an insulating layer (28),
**characterized in that**
at least one electrical, electronic and/or micromechanical component (4, 30) is integrated on or in the metallic layer and/or the insulating layer, and the component can be connected to a module (2) of the smart card.

2. Foil battery according to Claim 1, in which the metallic layer is an anode (9) or a cathode (10).

3. Foil battery according to Claim 1, in which the metallic layer is a contacting layer (12, 13) for creating an electrical connection to an anode or a cathode.

4. Foil battery according to Claim 1, in which the metallic layer is an additional metallic layer of the foil battery.

5. Foil battery according to one of the preceding Claims 1 to 4, in which the insulating layer is a layer for insulating the battery terminals (26, 27) of the foil battery.

6. Foil battery according to one of the preceding Claims 1 to 5, having an antenna winding (30) on the insulating layer which at least partially encircles one of the battery terminals of the foil battery.

7. Foil battery according to one of the preceding Claims 1 to 6, in which the metallic layer has first and second contact elements (5, 6) for supplying power to the module, and the first and/or the second contact element is used for making contact between the component and the module.

8. Foil battery according to one of the preceding Claims 1 to 7, in which the component is an antenna (14) or a coil (22).

9. Foil battery according to Claim 8, in which the antenna is electrically connected to the metallic layer and can be controlled by the module via one of the contact elements.

10. Foil battery according to Claim 8, in which the antenna or the coil is electrically insulated from the metallic layer and can be controlled by the module via a separate conductive connection (23, 24), wherein the conductive connection is preferably integrated in the metallic layer or applied onto the metallic layer.

11. Foil battery according to one of the preceding Claims 1 to 7, in which the component is designed as a capacitor, and a first capacitor electrode (16) of the capacitor is integrated in the first metallic layer (12) and a second capacitor electrode (17) is integrated in a second metallic layer (13), and the capacitor can be connected to the module via a separate conductive connection (25) in each case, wherein the conductive connections are preferably integrated in or applied onto the metallic layers.

12. Foil battery according to one of the preceding Claims 1 to 7, in which the component is an electrical resistor (15) and the electrical resistor is formed by a separate subregion of the metallic layer, it being preferably possible to connect the resistor to the module via two separate conductive connections and the conductive connections are preferably integrated in or applied onto the metallic layer.

13. Foil battery according to one of the preceding Claims 1 to 12, in which the component is arranged in or on an insulating layer (20) with respect to the metallic layer.

14. Smart card having a module (2) and having a foil battery (3) according to one of the preceding Claims 1 to 13, in which the foil battery is connected to the module for supplying power to the latter and for making the contact between the module and the component.

15. Smart card according to Claim 14 having one or more of the following elements: keypad (7), display (8), biometric sensors, cryptomemory chips, multifunction controllers, actuators, micromechanical components or systems.

16. Method for manufacturing a foil battery for use in a smart card and/or a smart card according to one of the preceding Claims 1 to 15, having the following steps:
- producing a foil battery having a metallic layer and/or an insulating layer, in which the metallic layer and/or the insulating layer have a region for integrating an electrical, electronic and/or micromechanical component,
- integrating the component on or in the metallic layer and/or the insulating layer.

17. Method for manufacturing a foil battery for use in a smart card according to one of the preceding Claims 1 to 15, having the following steps:
- producing a foil battery having a metallic layer, in which the metallic layer has a region for integrating an electrical or electronic component, and the region has a bending line at its edge,
- applying an insulating layer to the metallic layer,
- bending the region along the bending line until the component rests on the insulating layer.

18. Method according to Claim 17, in which the insulating layer is designed as an adhesive layer so that, once it rests on the adhesive layer, the component is fixed by the adhesive layer.

## Revendications

1. Pile en couches minces pour l'utilisation dans une carte à puce (1), ladite pile en couches minces (3) présentant une couche de métallisation (9, 10, 12, 13) et / ou une couche isolante (28),
**caractérisée en ce que**,
sur ou dans la couche de métallisation et / ou la couche isolante, au moins un élément électrique, électronique et / ou micromécanique (4, 30) est intégré, et que ledit élément peut être raccordé à un module (2) de la carte à puce.

2. Pile en couches minces selon la revendication 1, dans laquelle la couche de métallisation est une anode (9) ou une cathode (10).

3. Pile en couches minces selon la revendication 1, dans laquelle la couche de métallisation est une couche de connexion (12, 13) pour l'établissement d'une connexion électrique avec une anode ou une cathode.

4. Pile en couches minces selon la revendication 1, dans laquelle la couche de métallisation est une couche de métallisation supplémentaire de la pile en couches minces.

5. Pile en couches minces selon l'une des revendications précédentes 1 4, dans laquelle la couche isolante est une couche pour l'isolation des pôles (26, 27) de la pile en couches minces.

6. Pile en couches minces selon l'une des revendications précédentes 1 à 5, avec une bobine d'antenne (30) s'enroulant au moins partiellement, sur la couche isolante, autour de l'un des pôles de la pile en couches minces.

7. Pile en couches minces selon l'une des revendications précédentes 1 à 6, dans laquelle la couche de métallisation présente des premiers et des deuxièmes éléments de contact (5, 6) pour une alimentation en tension du module, et le premier et /ou le deuxième élément de contact est utilisé pour l'établissement d'un contact entre l'élément constituant et le module.

8. Pile en couches minces selon l'une des revendications précédentes 1 à 7, dans laquelle le composant est une antenne (14) ou une bobine (22).

9. Pile en couches minces selon la revendication 8, dans laquelle l'antenne est reliée électriquement à la couche de métallisation et peut être excitée à partir du module, par l'intermédiaire de l'un des éléments de contact.

10. Pile en couches minces selon la revendication 8, dans laquelle l'antenne ou la bobine est isolée électriquement de la couche de métallisation, et peut être excitée, par l'intermédiaire d'une connexion séparée (23, 24), à partir du module, la connexion étant préférentiellement intégrée dans la couche de métallisation ou appliquée sur la couche de métallisation.

11. Pile en couches minces selon l'une des revendications précédentes 1 à 7, dans laquelle le composant est réalisé en tant que condensateur et une première électrode de condensateur (16) du condensateur est intégrée dans la première couche de métallisation (12), et une deuxième électrode de condensateur (17) est intégrée dans une deuxième couche de métallisation (13), et le condensateur peut être relié au module par l'intermédiaire d'une connexion séparée (25) respective, les connexions étant préférentiellement intégrées dans les couches de métallisation ou appliquées sur celles-ci.

12. Pile en couches minces selon l'une des revendications précédentes 1 à 7, dans laquelle le composant est une résistance électrique (15) et la résistance électrique est formée par une section partielle, séparée de la couche de métallisation, la résistance pouvant être reliée au module préférentiellement par l'intermédiaire de deux connexions séparées, et les connexions étant préférentiellement intégrées dans la couche de métallisation ou appliquées sur celle-ci

13. Pile en couches minces selon l'une des revendications précédentes 1 à 12, dans laquelle le composant est installé dans ou sur une couche isolante (20) assurant l'isolation par rapport à la couche de métallisation.

14. Carte à puce avec un module (2) et avec une pile en couches minces (3) selon l'une des revendications précédentes 1 à 13, ladite pile en couches minces étant reliée avec le module pour l'alimentation en tension de celui-ci et pour la mise en contact du module avec l'élément.

15. Carte à puce selon la revendication 14 avec l'un ou plusieurs des éléments suivants : clavier (7), écran (8), capteurs biométriques, puces mémoires cryptées, contrôleur multi-fonctionnel, actionneurs, constituants ou systèmes micromécaniques.

16. Procédé pour la fabrication d'une pile en couches minces, pour la mise en oeuvre dans une carte à puce, et / ou d'une carte à puce selon l'une des revendications précédentes 1 à 15, comprenant les étapes suivantes :
- Fabrication d'une pile en couches minces avec une couche de métallisation et / ou une couche isolante, la couche de métallisation et / ou la couche isolante présentant une zone pour l'intégration d'un composant électrique, électronique et / ou micromécanique,
- Intégration du composant sur ou dans la couche de métallisation et / ou la couche isolante.

17. Procédé pour la fabrication d'une pile en couches minces, pour la mise en oeuvre dans une carte à puce, selon l'une des revendications précédentes 1 à 15, comprenant les étapes suivantes ;
- Fabrication d'une pile en couches minces avec une couche de métallisation, ladite couche de métallisation présentant une zone pour l'intégration d'un composant électrique ou électronique, et la zone présentant une ligne de pliage sur son bord,
- Application d'une couche isolante sur la couche de métallisation,
- Pliage de la zone le long de la ligne de pliage, jusqu'à ce que le composant soit couché sur la couche isolante.

18. Procédé selon la revendication 17, la couche isolante étant réalisée en tant que couche adhésive de sorte que le composant se trouve fixé par la couche adhésive après avoir été couché sur la couche adhésive.
